## Europäisches Patentamt

## European Patent Office

## Office européen des brevets

(19)

(11) Veröffentlichungsnummer: **0 074 659**
**B1**

(12) **EUROPÄISCHE PATENTSCHRIFT**

(45) Veröffentlichungstag der Patentschrift:
**16.08.89**

(51) Int. Cl.⁴: **G 05 B 19/18, G 05 B 19/417**

(21) Anmeldenummer: **82108445.6**

(22) Anmeldetag: **13.09.82**

(54) **Zahnradbearbeitungsmaschine.**

(30) Priorität: **14.09.81 DE 3136390**

(43) Veröffentlichungstag der Anmeldung:
**23.03.83 Patentblatt 83/12**

(45) Bekanntmachung des Hinweises auf die Patenterteilung:
**16.08.89 Patentblatt 89/33**

(84) Benannte Vertragsstaaten:
**CH DE FR GB IT LI**

(56) Entgegenhaltungen:
**DE-A- 3 131 823**
**US-A- 4 253 050**
**US-A- 4 414 495**

**ZEITSCHRIFT FÜR INDUSTRIELLE FERTIGUNG, Band 71, Nr. 12, Dezember 1981, Seiten 729-733, Würzburg, DE; A. SIGNER: "CNC, nach MPST-Empfehlungen aufgebaut"**
**KONSTRUKTION, Band 32, Nr. 9, 1980, Seiten 339-344, Springer Verlag, DE; G. STUTE u.a.: "Der Mikrorechner als Steuergerät fertigungstechnischer Anlagen"**

(73) Patentinhaber: **Liebherr-Verzahntechnik GmbH, Postfach 1960, D-8960 Kempten (DE)**

(72) Erfinder: **Stute, Gottfried, Dr., Umgelter Weg 12a, D-7000 Stuttgart (DE)**
Erfinder: **Schwiegelshohn, Karl, Dr., Hermann-von-Barth-Strasse 49, D-8960 Kempten (DE)**

(74) Vertreter: **Klunker, Hans-Friedrich, Dr. et al, Patentanwälte Klunker . Schmitt-Nilson . Hirsch Winzererstrasse 106, D-8000 München 40 (DE)**

## Beschreibung

Die Erfindung betrifft eine Wälzstoß- oder Wälzfräsmaschine zur Zahnradbearbeitung mit elektronisch angesteuerten, separaten Antrieben, für die in mehreren Achsen überlagerte Bewegung des Werkzeugs und des zu bearbeitenden Werkstücks, wobei, abhängig von den Lage-Ist-Werten des Werkzeugs der Antrieb der Werkstücke nachjustiert wird.

In der Vergangenheit waren Zahnradbearbeitungsmaschinen in der Regel mit mechanischen Getriebezügen ausgerüstet. Die relative Bewegung des Schneidrads und des zu verzahnenden Werkrads, beim Stoßen beispielsweise in vier und beim Fräsen in sechs Achsen, wurde mechanisch von einem einzigen Hauptantrieb abgeleitet. Zum Umrüsten mußten jedesmal eine große Zahl von Teil- und Vorschubwechselrädern verschoben bzw. ausgewechselt werden. Die dadurch bedingten langen Umrüstzeiten verteuern jedes einzelne Zahnrad. Zur Reduzierung der Nebenzeiten ist es bereits bekannt, Zahnradbearbeitungsmaschinen mit dezentralisierten Antrieben auszurüsten, d.h. mit getrennten Antrieben für jede Welle. Die kinematische Kopplung erfolgt dabei nach dem Prinzip der elektrischen Welle, d.h. ein Motor liefert über ein Winkelmeßsystem eine Führungsgröße, die dem anderen Motor als Stellgröße zugeführt wird. Es ist in diesem Zusammenhang bereits bekannt, die Kopplung fest verdrahtete elektronische Bausteine zu bewirken. Fest verdrahtete elektronische Steuerungen haben aber den Nachteil eines hohen Aufwandes und geringer Zuverlässigkeit. Es liegt in der Natur dieser festverdrahteten Schaltungen, daß Änderungen und Anpassungen nur in begrenztem Maße möglich sind.

Da Werkrad und Stoßrad beim Wälzstoßen und Wälzfräsen in komplizierten Bewegungsbahnen geführt werden, beim Stoßen wird die Bewegung durch vier unterschiedlich im Raum angeordnete Drehachsen und beim Fräsen durch sechs unterschiedliche Drehachsen dargestellt, müssen die Umdrehungen der separaten Antriebe genau aufeinander abgestimmt sein. Entscheidend ist dabei eine Führungsgröße, beispielsweise beim Wälzstoßen die Hubzahl, welche das Spannvolumen und damit die Zerspanleistung bestimmt. Alle anderen Bewegungen sind von dieser Führungsgröße abhängig und müssen bei einer Verstellung dieser Führungsgröße entsprechend nachgeregelt werden. Es hat sich daher eingebürgert, den Vorschub für die Radialbewegung und die Wälzbewegung in mm pro Hub anzugeben.

Die handelsüblichen Standard-Steuerungen sind jedoch nur auf bestimmte Vorschübe pro Zeiteinheit einstellbar, so daß bei jedem Umrüsten alle Schalter nach entsprechend empirisch oder rechnerisch ermittelten Tabellen umgestellt werden müssen.

Numerische Standard-Steuerungen können, zur Zahnradbearbeitung eingesetzt, nur Teile der insgesamt zu bewältigenden Steuerungsaufgaben übernehmen. Die Wälzkopplung als Kern der Steuerung einer nach dem Wälzprinzip arbeitenden Zahnradbearbeitungsmaschine muß durch getrennte elektronische Schaltungen verwirklicht werden. Es ist zwar bekannt, als numerische Steuerung einen oder mehrere Rechner zu verwenden (CNC), der Einsatz eines solchen Rechners auch für die Wälzkopplung scheiterte jedoch bisher daran, daß für die exakte Kopplung der Wälzbewegung zwischen Schneid- und Werkrad eine Nachführung in Echtzeit nicht möglich war. Standardgemäß können derartige Rechner nur alle 10 bis 15 Millisek. Befehle ausgeben. Derartige Zeitintervalle sind jedoch bei der im vorliegenden Zusammenhang verlangten Präzision nicht tragbar.

Aus der «Zeitschrift für industrielle Fertigung» (Vol. 71, 1981, S. 729–733) ist bereits allgemein auf die Vorzüge und den Aufbau eines modularen Mehrprozessor-Steuersystems (MPST) eingegangen. Insbesondere ist in dieser Veröffentlichung beschrieben, wie innerhalb der MPST-Struktur der Aufbau einer numerischen Steuerung und einer speicherprogrammierbaren Steuerung sein könnte.

In diesem Zusammenhang wird auch die Lösungsmöglichkeit MPST-BUS für die speicherprogrammierbare Steuerung (PC) und MPST-BUS für die numerische Steuerung mit einer Schnittstelle NC-PC in Form eines Dual-Port-RAM Datenspeichers mit zweiseitigem Zugriff als Koppelglied vorgestellt. Obwohl in allgemeiner Form darauf hingewiesen wird, daß das Anwendungsgebiet der Systembausteine auch für umfangreiche mehrachsig verkettete Fertigungssysteme geeignet ist, fehlt ein konkreter Hinweis, wie die Probleme bei einer Wälzstoß- oder Wälzfräsmaschine konkret gelöst werden können.

Die US-Patentschrift 4 253 050 baut auf das bekannte und bereits ausgeführte Prinzip der Synchronisation bei Wälzfräsmaschinen auf und überträgt dieses Prinzip auf Schleifmaschinen. Zur Bildung des Sollwertes für die Werkstückachse werden dabei Einzelzählergebnisse in analoge Signale umgewandelt und anschließend gemischt. Zwar wird bei der bekannten Maschine der Antrieb des Werkstücks dem Lage-Ist-Wert des Werkstücks nachjustiert, es handelt sich jedoch letzlich um eine «Hardware»-Lösung.

Der Erfindung liegt die Aufgabe zugrunde, bei einer Maschine gemäß Oberbegriff des Hauptanspruchs durch eine Integration der Wälzkopplung in die Steuerung den konstruktiven Aufwand zu reduzieren und damit die Zuverlässigkeit zu erhöhen. Dabei soll von den Vorteilen eines bekannten modular aufgebauten Mehrprozessor-Steuersystems Gebrauch gemacht werden. Insbesondere wird angestrebt, einen Dialog mit der Maschine in technologisch üblichen Größen, d.h. beispielsweise in mm pro Hub oder auch in mm pro Werkstückumdrehung zu führen.

Erfindungsgemäß wird diese Aufgabe dadurch gelöst, daß ein in der Maschine integriertes, modular aufgebautes Steuerungsrechnersystem mit mehreren Prozessoren (MPST) vorgesehen ist, bestehend aus wenigstens einem Prozessor für die Organisation des Zugriffs zur Datensammelleitung, einem Prozessor für die Koppelung der Wälzbewegung zwischen Stoß- und Werkrad, der die Drehstellung und Geschwindigkeit des Spanntisches wenigstens alle 5 ms der Ist-Stellung der Stoßspindel nachregelt, mit einem Prozessor für die Regelung der Linearachsen und übrigen Hilfsachsen, wie radialer Zustellung und Auflaufsteuerung des Hubstößels, wobei der Zugriff des Prozessors für die Wälzkopplung zu den Lage-Ist-Werten der relativen Winkelpositionen von Stoß- und Werkrad zu vorbestimmten Zeitintervallen dadurch sichergestellt ist, daß der Zugriff zur Datensammelleitung (BUS) mit einer Vorlaufzeit beantragt wird, die größer ist, als die längste Benutzungszeit der Datensammelleitung durch die jeweils anderen Prozessoren.

Die zentrale Idee der Erfindung, nämlich die Wälzkopplung mit entsprechender Priorität in das Mehrprozessor-Steuersystem zu integrieren, ergibt zahlreiche Vorteile. Eine Änderung technologischer Parameter vorort ist jederzeit möglich, die Bedienungsperson muß dazu nicht wie bisher auf die Arbeitsvorbereitungen rückgreifen, die für die Änderung eines bestimmten Parameters eine entsprechende Serie neuer Einstellwerte errechnet hat. Die Anpassung erfolgt innerhalb des Systems, d.h. die Wälzkopplung wird in Abhängigkeit aller anderen einstellbaren Größen ständig justiert. Dadurch ergibt sich beispielsweise die Möglichkeit, mehrere sogenannte «Override»-Schalter vorzusehen, mit denen einzelne Vorschübe verlangsamt werden können.

Im Gegensatz zur bekannten Lösung handelt es sich hier also um keine feste Kopplung der einzelnen Bewegungen, wie sie beispielsweise ein «elektronisches Getriebe» bietet, die Bewegungsverhältnisse werden vielmehr ständig neu ermittelt und bei Abweichungen nachgestellt. Damit wird eine bisher nicht gekannte Flexibilität erreicht. Die Maschinen können vorort programmiert werden, der Dialog mit der Maschine kann in üblichen Größen, d.h. in mm pro Hub erfolgen.

Es besteht weiterhin die Möglichkeit, bestimmte Meßsysteme in die Steuerung zu integrieren, so daß beispielsweise der Bearbeitungsvorgang abhängig von ständig gemessenen Materialeigenschaften gesteuert wird.

Daß die Umsetzung der Werkstückdaten in Maschinensteuerdaten, die bisher in der Arbeitsvorbereitung erfolgte, systemintern durchgeführt wird, kann auch die Verkettung, Arbeitsvorbereitung und der Werkstückfluß nach Fertigstellung systemintern berücksichtigt werden.

Weitere Vorteile der Erfindung sind nachfolgend aus der Beschreibung eines Ausführungsbeispiels zu entnehmen. Das Ausführungsbeispiel wird anhand einer beigefügten Zeichnung erklärt. Darin zeigen:

Fig. 1 die schematische Darstellung einer Wälzstoßmaschine, und

Fig. 2 ein Blockschaltbild der Hardwarestruktur einer erfindungsgemäßen Wälzstoßmaschine.

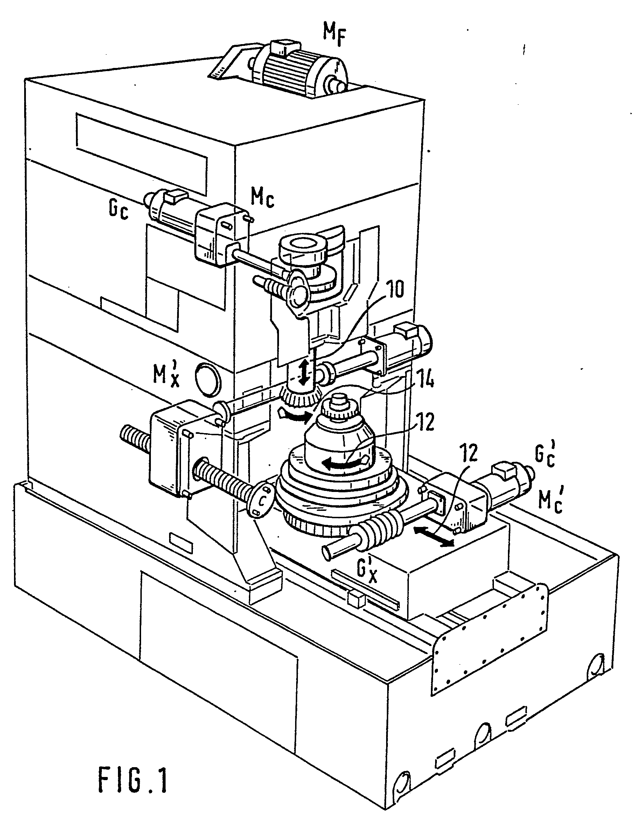

Die in Fig. 1 gezeigte, erfindungsgemäße Wälzstoßmaschine weist einen Hauptantrieb $M_t$ für die Hubbewegung des Stoß- oder Schneidrades 10 auf, einen Antrieb $M_C$ für die Wälzbewegung des Stoßrades 10, einen Antrieb $M_{C'}$ für die Wälzbewegung des Tisches 12 bzw. des auf dem Tisch aufgespannten Werkrades 14, sowie einen Antrieb $M_x$, für die Radialzustellung des Tisches 12.

Der Bewegungsablauf beim Stoßen schrägverzahnter Stirnräder ist bekannt. Das Stoßrad 10 führt eine axial hin- und hergehende Hubbewegung aus, von der als Führungsgröße alle anderen Bewegungen abhängen. Der Hubbewegung des Stoßrades 10 ist eine Wälz- bzw. Drehbewegung überlagert, die mit der Wälz- bzw. Drehbewegung des Werkrades 14, bewirkt durch den Antrieb $M_C$, korrespondiert. Der Drehbewegung des Tisches 12 ist bei Herstellung schrägverzahnter Stirnräder noch eine hubabhängige Zusatzbewegung zur Herstellung der Schrägung des Zahnes überlagert. Schließlich bewirkt die radiale Zustellung ein spiraliges Eintauchen des Stoßrades in das Material des Werkrads. Die Arbeitsweise einer derartigen Maschine ist bekannt und braucht daher in vorliegendem Zusammenhang nicht weiter behandelt zu werden.

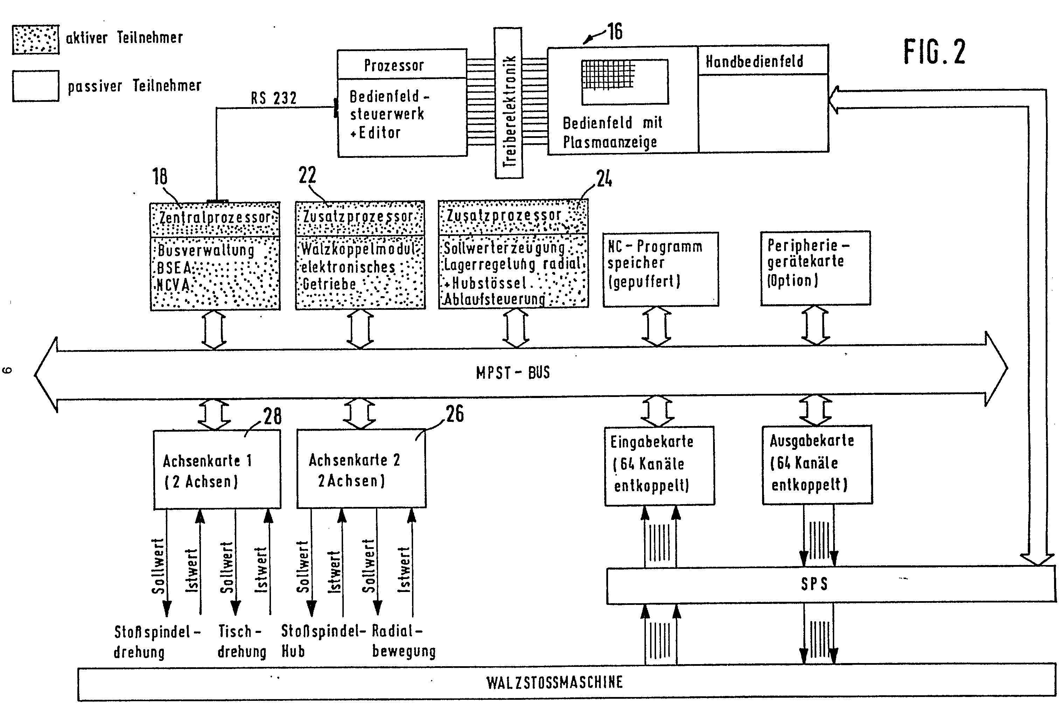

Der Maschine zugeordnet ist ein modulares Mehrprozessor-Steuersystem, d.h. Prozessorrechner, welche die Vorschübe der einzelnen Antriebe abhängig von der jeweiligen Hubzahl steuern. Ein Schemabild dieses Systems zeigt Fig. 2.

Kernbestandteil des Systems sind drei modulare Prozessoren, die über eine Datensammelleitung miteinander bzw. mit sogenannten Achsenkarten kommunizieren, deren Funktion nachfolgend noch näher erläutert wird.

Der Dialog mit der Maschine findet über ein Bedienfeld 16 statt, das sämtliche Größen in technologisch üblicher Form, d.h. in mm pro Hub angibt. Vor Weiterleitung der Signale an die Prozessorbausteine werden die Größen entsprechend umgerechnet und digitalisiert.

Der Prozessor 18 ist im wesentlichen für den Verkehr mit der Datensammelleitung 20 dem sogenannten BUS verantwortlich. Will ein Prozessor über den BUS 20 mit einer der Achsenkarten 22, 24 kommunizieren, muß er vorher beim Prozessor 18 den Zugriff beantragen. Der Prozessor 18 teilt den Zugriff dann abhängig von den jeweiligen Prioritäten des Gesamtsystems bei nächster Gelegenheit zu.

Der Prozessor 22 ist allein für die Wälzkopplung zwischen Stoßrad 10 und Werkrad 14 bzw. Stoßspindel und Tisch 12 verantwortlich. Der Prozessor 24 schließlich dient der Regelung der anderen Parameter wie radialer Zustellung und Ablaufsteuerung des Hubstößels.

Die Achsenkarten 26, 28 enthalten Impulszähler, die von Inkrementalgebern an Stoßspindel und Tisch gespeist werden. Die Summe der in einer bestimmten Zeiteinheit aufsummierten Impulse entspricht somit einer bestimmten Winkeldrehung bzw. Vorschubstrecke.

Zur Sicherstellung einer exakten Wälzkopplung zwischen Stoßrad und Werkrad wird der Zugriff zur Achsenkarte 28 vom Prozessor 22 mit einer Vorlaufzeit beantragt, die jedenfalls länger ist, als die längste Zeit, die einer der anderen Prozessoren die Datenleitung blockiert. Mit dieser Maßnahme wird sichergestellt, daß zu einem ganz bestimmten definierten Zeitpunkt der Zugriff auf die Zähler für die Stellung von Stoßrad und Werkrad erfolgt. Dies ist deswegen von besonderer Wichtigkeit, weil die Zähler ständig weiterzählen, so daß ein verspäteter Zugriff eine andere «Winkelstellung» anzeigen würde.

Die Achsenkarten 26, 28 enthalten im übrigen noch jeweils einen Digital-Analogwandler, der die zunächst in digitaler Form übermittelten Sollwerte in Analogsignale für die Antriebsmotore umsetzt.

Der Prozessor 24, der abhängig von der Führungsgröße, d.h. des Ist-Wertes des Stoßspindelhubes, die Positionen aller anderen Achsen berechnet, berechnet pro Zyklus auch jeweils mehrere korrespondierende Werte für die Wälzbewegung Stoßrad-Schneidrad.

Diese Werte werden dann absatzweise in einen Speicher des Prozessors 22 übertragen, der alle 2,5 Millisek. entsprechende Regelsignale an den Stoßspindel- und Tischantrieb abgibt. Dieser Speicher ist deswegen erforderlich, weil der Zyklus des Prozessors 24 etwa 10 bis 15 Millisek. beträgt, andererseits aber die Steuerbefehle für die Wälzkopplung alle 2,5 Millisek. gegeben werden müssen.

Neben den bereits erwähnten Vorteilen, bietet die erfindungsgemäße Maschine auch die Möglichkeit, die Zusatzdrehbewegung, die der eigentlichen Wälzdrehbewegung des Tisches 12 überlagert werden muß, falls schrägverzahnte Stirnräder gestoßen werden sollen, über eine entsprechende Programmierung des Prozessors 24 zu erzeugen. Damit kann die üblicherweise verwendete Führungsbüchse für die Stoßspindel entfallen.

Obwohl die Erfindung vorstehend anhand einer Wälzstoßmaschine beschrieben wurde, kann sie mit gleichem Erfolg auch bei einer Wälzfräsmaschine eingesetzt werden. Hier sind lediglich die Bewegungsabläufe noch etwas komplexer, da statt vier Achsen beim Wälzstoßen sechs Achsen überwacht und gesteuert werden müssen. Entscheidend ist jedoch auch in dieser Anwendung, daß eine Führungsgröße bestimmt wird, aus deren Ist-Wert der Sollwert gekoppelter Bewegungen abgeleitet wird. Die Wälzkopplung des miteinander kämmenden Schneid- und Werkrades wird wieder dadurch sichergestellt, daß Steuerbefehle wenigstens alle 5 Millisek., vorzugsweise alle 2,5 Millisek. abgegeben werden.

## Patentansprüche

1. Wälzstoß- oder Wälzfräsmaschine zur Zahnradbearbeitung mit elektronisch angesteuerten, separaten Antrieben, für die in mehreren Achsen überlagerte Bewegung des Werkzeugs (10) Und des zu bearbeitenden Werkstücks (14), wobei, abhängig von den Lage-Ist-Werten des Werkzeugs der Antrieb des Werkstücks nachjustiert wird, dadurch gekennzeichnet, daß ein in der Maschine integriertes, modular aufgebautes Steuerungsrechnersystem mit mehreren Prozessoren (MPST) vorgesehen ist, bestehend aus wenigstens einem Prozessor (18) für die Organisation des Zugriffs zur Datensammelleitung (BUS), einem Prozessor (22) für die Koppelung der Wälzbewegung zwischen Stoß- (10) und Werkrad (14), der die Drehstellung und Geschwindigkeit des Spanntisches (12) wenigstens alle 5 ms der Ist-Stellung der Stoßspindel nachregelt, mit einem Prozessor (24) für die Regelung der Linearachsen und übrigen Hilfsachsen, wie radialer Zustellung und Ablaufsteuerung des Hubstößels, wobei der Zugriff des Prozessors (22) für die Wälzkopplung zu den Lage-Ist-Werten der relativen Winkelpositionen von Stoß- und Werkrad zu vorbestimmten Zeitintervallen dadurch sichergestellt ist, daß der Zugriff zur Datensammelleitung (BUS) mit einer Vorlaufzeit beantragt wird, die größer ist, als die längste Benutzungszeit der Datensammelleitung durch die jeweils anderen Prozessoren (18, 24).

2. Wälzstoß- oder Wälzfräsmaschine nach Anspruch 1, dadurch gekennzeichnet, daß der Zugriff des Prozessors (24) für die Wälzkopplung auf die Lage-Ist-Werte der relativen Winkelpositionen von Stoß- und Werkrad alle 2,5 ms erfolgt.

3. Wälzstoß- oder Wälzfräsmaschine nach Anspruch 1 oder 2, dadurch gekennzeichnet, daß das Messen der Position der einzelnen Achsen mittels Pulszählern erfolgt, die von Inkrementalgebern gelieferte Impulse drehrichtig aufaddieren, die in vorher festgelegten Zeitintervallen abgerufen werden.

4. Wälzstoß- oder Wälzfräsmaschine nach einem oder mehreren der vorangehenden Ansprüche, dadurch gekennzeichnet, daß der Maschine ein Bedienfeld (16) zugeordnet ist, das von einem weiteren Prozessor überwacht wird und das die Eingabe aller Größen in technologisch üblicher Form, insbesondere bezogen auf mm/Hub bei Wälzstoßmaschinen und in mm/Werkstückumdrehung bei Wälzfräsmaschinen ermöglicht.

## Claims

1. A gear shaping machine by the generating process or a hob cutter comprising electronically controlled, separate drives for moving the tool (10) and the workpiece (14) to be machined, said movement being superimposed on a plurality of axes, the drive of the workpiece being readjusted in accordance with the actual position values of the tool, characterized in that a modular control computer system integrated into the machine and comprising a plurality of processors (MPST) is provided that consists of at least one processor (18) for organizing the access to the data bus (BUS), a processor (22) for coupling the rolling movement between the shaping wheel (10) and the work wheel (14), said processor readjusting the rotating position and speed of the clamping table (12) at least every 5 ms to the actual position of the shaping spindle, and a processor (24) for regulating the linear axes and other additional axes as well as the radial feed motion and run-off control of the lifting ram, the access of the processor (22) for the rolling coupling to the actual position values of the relative angular positions of the shaping and work wheels at predetermined time intervals being ensured in that the access to the data bus (BUS) is requested with a lead time which is longer than the longest time during which the data bus is used by the other processors (18, 24).

2. A gear shaping machine by the generating process or a hob cutter according to claim 1, characterized in that the access of the processor (24) for the rolling coupling to the actual position values of the relative angular positions of the shaping and work wheels occurs every 2.5 ms.

3. A gear shaping machine by the generating process or a hob cutter according to claim 1 or 2, characterized in that the positions of the individual axes are measured by means of pulse counters which add up the pulses from incremental transmitters correctly in terms of the rotation, said pulses being called in at predetermined time intervals.

4. A gear shaping machine by the generating process or a hob cutter according to one or more of the above claims, characterized in that the machine has associated thereto a control panel (16) that is monitored by a further processor and allows for the input of all variables in the customary technological form, in particular with respect to millimeters per stroke for gear shapers and in millimeters per workpiece rotation for hob cutters.

**Revendications**

1. Machine à raboter en développante ou à fraiser par développante pour l'usinage de roues dentées, avec des organes moteurs séparés, commandés électroniquement pour le mouvement additif sur plusieurs axes de l'outil (10) et de la pièce à usiner (14), l'organe moteur de la pièce à usiner étant rajusté en fonction des valeurs réelles de position de l'outil, caractérisée en ce qu'un système informatique de commande avec plusieurs processeurs (MPST), construit selon le principe modulaire et intégré dans la machine, est prévu, comprenant au moins un processeur (18) pour l'organisation de l'accès au commun de données (bus), un processeur (22) pour le couplage du mouvement de roulis de la roue de rabot (10) et de la roue à usiner (14), rajustant la position rotative et la vitesse de la table de serrage (12) en fonction de la position réelle de la broche de rabot au moins tous les 5 ms, un processeur (24) pour le réglage des axes linéaires et des autres axes auxiliaires, comme l'approche radiale et la commande séquentielle du coulisseau de montée et descente, l'accès du processeur (22) pour le couplage de roulement aux valeurs réelles de position des positions angulaires relatives de la roue de rabot et de la roue à usiner à des intervalles de temps prédéfinies étant assuré par le fait que l'accès au commun de données (bus) est demandé à un temps d'avance dépassant le temps d'utilisation maximal du commun de données par les autres processeurs respectifs (18, 24).

2. Machine à raboter en développante ou à fraiser par développante selon la revendication 1, caractérisée en ce que l'accès du processeur (24) pour le couplage de roulement aux valeurs réelles de position des positions angulaires relatives de la roue de rabot et de la roue à usiner se réalise tous les 2,5 ms.

3. Machine à raboter en développante ou à fraiser par développante selon la revendication 1 ou 2, caractérisée en ce que le mesurage des positions des axes individuels est effectué au moyen de totalisateurs d'impulsions faisant, correctement par rapport à la rotation, le total des impulsions fournies par les capteurs incrémentiels et appelées à des intervalles de temps prédéterminés.

4. Machine à raboter en développante ou à fraiser par développante selon une ou plusieurs des revendications précédentes, caractérisée en ce qu'il y a un tableau de commande (16) attribué à la machine, contrôlé par un autre processeur et permettant l'introduction de toutes les grandeurs dans la forme technologique habituelle, notamment en ce qui concerne les mm/course pour les machines à raboter en développante et en mm/tour de pièce à usiner pour les machines à fraiser par développante.

FIG.1

7

FIG. 2

aktiver Teilnehmer

passiver Teilnehmer

EP 0 074 659 B1